Europäisches Patentamt

European Patent Office

Office européen des brevets

(11) Veröffentlichungsnummer: **0 398 169 B1**

## EUROPÄISCHE PATENTSCHRIFT

(45) Veröffentlichungstag der Patentschrift: **17.08.94**

(51) Int. Cl.5: **H04B 7/005**

(21) Anmeldenummer: **90108867.4**

(22) Anmeldetag: **11.05.90**

(54) **Autoradio mit einem digitalen Entzerrernetzwerk.**

(30) Priorität: **19.05.89 DE 3916426**

(43) Veröffentlichungstag der Anmeldung:
**22.11.90 Patentblatt 90/47**

(45) Bekanntmachung des Hinweises auf die Patenterteilung:
**17.08.94 Patentblatt 94/33**

(84) Benannte Vertragsstaaten:
**AT DE ES FR GB IT SE**

(56) Entgegenhaltungen:
EP-A- 0 054 811    EP-A- 0 325 668
DE-A- 3 444 449    DE-A- 3 517 485
DE-A- 3 543 898    US-A- 4 388 724

(73) Patentinhaber: **Blaupunkt-Werke GmbH**
**Postfach 77 77 77,**
**Robert-Bosch-Strasse 200**
**D-31132 Hildesheim (DE)**

(72) Erfinder: **Kammeyer, Karl-Dirk, Prof.-Dr.-Ing.**
**Finkennest 6**
**D-2110 Buchholz i.d. N. (DE)**

(74) Vertreter: **Eilers, Norbert, Dipl.-Phys.**
**Blaupunkt-Werke GmbH**
**Patente und Lizenzen**
**Postfach 77 77 77**
**D-31132 Hildesheim (DE)**

**Beschreibung**

Die vorliegende Erfindung betrifft ein Autoradio mit einem digitalen Entzerrernetzwerk der im Oberbegriff des Anspruchs 1 näher definierten Art für die Heilung von durch Mehrwegeempfang gestörten frequenzmodulierten Signalen.

Es ist bekannt, daß man viele Störungen in einem digitalisierten Signal durch geeignete Rechenoperationen heilen kann. Dazu wird der digitale Abtastwert mit dem Kehrwert des Störfaktors multipliziert, in dem sich das gestörte Signal vom ungestörten Signal unterscheidet.

Beim Rundfunkempfang ist das Maß der Störung des empfangenen Signals, also der Störfaktor, unbekannt. Beim Empfang von UKW-Sendern, das heißt von frequenzmodulierten Trägern, weiß man jedoch, daß der Sender den Träger mit konstanter Amplitude aussendet. Aus den Abweichungen der Hüllkurve des empfangenen Signals von einem konstanten Wert kann man daher zunächst auf eine Störung schließen. Doch ist daraus der Störungsfaktor selbst noch nicht bekannt, da die Dämpfung des Sendersignals auf dem direkten Übertragungsweg unbekannt bleibt und damit auch der Bezugswert, auf den die festgestellten Amplitudenschwankungen zu beziehen sind, die z. B. als Impulsspitzen oder Signaleinbrüche auftreten.

Solche Signalspitzen oder -einbrüche entstehen bei dem Mehrwegeempfang eines Sendersignals und haben ihre Ursache darin, daß sich am Eingang des Rundfunkempfängers das direkt empfangene Signal mit anderen Signalen, die auf ihrem Ausbreitungsweg reflektiert wurden, überlagern. Den Übertragungsraum zwischen Sender und Empfänger kann man daher als ein Verzerrungsnetzwerk ansehen, dem auf der Empfängerseite ein entsprechendes Entzerrernetzwerk, welches den Kehrwert der Verzerrung in Übertragungsraum darstellt, folgen muß, wenn man die Störungen wieder beseitigen will.

Für die Heilung einer Störung durch Zweiwegeempfang ist ein solches Entzerrernetzwerk mit einer Kaskadenstruktur und einem adaptiven Parameterprozessor in der EP-A-325 668 beschrieben, wobei das Entzerrernetzwerk fortlaufend adaptiv in einzelnen Schritten eingestellt wird und die Einstellung nach einem Gradientenverfahren erfolgt.

Ist der Rundfunkempfänger an einem festen Standort aufgestellt, dann stellt sich das Entzerrernetzwerk schrittweise auf einen Zustand ein, bei dem am Ausgang schließlich ein geheiltes Signal abgenommen werden kann.

In dem zum Stand der Technik gehörenden Patentanmeldung DE-A-35 43 898 ist ein anderes Entzerrernetzwerk mit einer transversalen Struktur und einem adaptiven Parameterprozessor für den Zweiwegeempfang beschrieben.

Zum Stand der Technik gehört ferner die Patentanmeldung DE-A-35 17 485, in der das der EP-A-325 668 zugrundeliegende Entzerrernetzwerk mit einer Kaskadenstrvktur näher beschrieben ist und die DE-A-34 44 449, in der das der DE-A-35 43 898 zugrundeliegende Entzerrernetzwerk mit transversaler Struktur beschrieben ist.

Der vorliegenden Erfindung lag die Aufgabe zugrunde, ein Entzerrernetzwerk zu finden, das ein auf mir als zwei Wegen empfangenes, gestörtes Eingangssignal zu heilen in der Lage ist.

Die Lösung ist mit den kennzeichnenden Merkmalen des Patentanspruchs 1 umschrieben.

Die Erfindung wird anhand der Zeichnung im folgenden näher erläutert. Darin zeigen

Figur 1     ein Blockschaltbild eines Autoradios
Figur 2     ein Prinzipschaltbild des erfindungsgemäßen Entzerrernetzwerk mit drei Teilentzerrern
Figur 3     ein detaillierteres Blockschaltbild des erfindungsgemäßen Entzerrernetzwerks
Figur 4     ein Blockschaltboild eines adaptiven Parameter-Prozessors für den ersten Teilentzerrer
Figur 5     ein Blockschaltbild des Parameterprozessors für den zweiten Teilentzerrer
Figur 6     ein Blockschaltbild des Parameterprozessors für den dritten Teilentzerrer

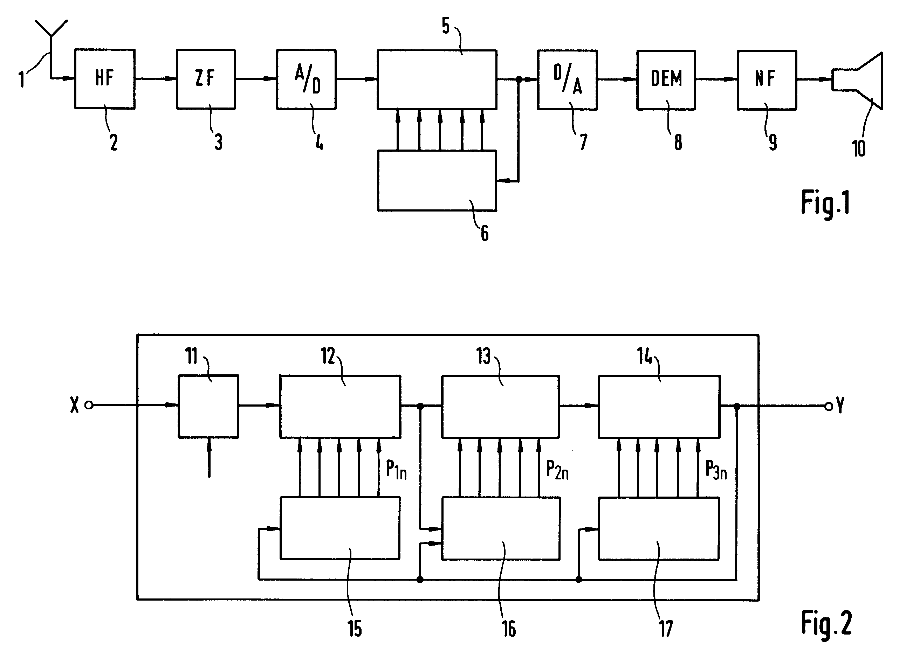

Das in Figur 1 dargestellte Autoradio empfängt über die Antenne 1 den Träger des im Tuner 2 eingestllten Senders einerseits auf dem direkten, dem kürzesten Weg und andererseits auf ggf. mehreren durch Signalreflexionen an Hängen und Wänden hervorgerufenen Umwegen. In der ZF-Stufe 3 wird die Modulation des Trägers auf eine genormte Zwischenfrequenz umgesetzt, die bei frequenzmodulierten, digitalisierten Trägern, deren gestörtes Signal geheilt werden soll, vorzugsweise gleich 0 ist. Die Frequenzmodulation liegt dann in der Basislage vor. An die ZF-Stufe 3 schließt sich ein A/D-Wandler 4 an, sofern ein A/D-Wandler nicht schon vor der ZF-Stufe vorgesehen ist. Darauf folgt ein Entzerrernetzwerk 5 mit einem diesen steuernden adaptiven Parameterprozessor 6. An den Ausgang des Entzerrernetzwerkes ist ein D/A-Wandler 7 angeschlossen, der mit einem Demodulator 8 verbunden ist. Am Ausgang des Demodulators 8 steht das MPX-Signal zur Verfügung, das in einer NF-Stufe 9 weiterverarbeitet wird. Gegebenenfalls wird ein D/A-Wandler erst an den Ausgang der NF-Stufe 9 angeschlossen. Der Tonkanal in der NF-Stufe 9 ist durch den Lautsprecher 10 abgeschlossen.

In Figur 2 ist die erfindungsgemäße Ausbildung des Entzerrernetzwerkes und seines adaptiven Parameterprozessor mehr in Detail dargestellt. Das Ausgangssignal X des A/D-Wandlers 4 wird in einem ersten Multiplizierer 11 normiert. Auf den Multiplizierer 11 folgt ein erster adaptiver Teilentzerrer 12 mit einer Kaskadenstruktur, ein zweiter adaptive Teilentzerrer 13 mit einer Transversalstruktur und ein dritter adaptiver Teilentzerrer 14 mit einer Doppelkaskadenstruktur.

Der erste Teilentzerrer 12 dient der Beseitigung der minimalphasigen Nullstellen des Übertragungskanals, wobei jede Nullstelle durch ein rekursives Teilsystem in der Kaskade kompensiert wird.

Der zweite Teilentzerrer 13 dient zur Korrektur nichtselektiver Mehrwegeeinflüsse. Der dritte Teilentzerrer 14 kompensiert die nichtminimalphasigen Nullstellen durch Approximation von Polen außerhalb des Einheitskreises.

Die in dem Parameterprozessor 15 ermittelten Parameter $P_{1n}$ werden in den Parameterprozessor 15 zur Ermittlung des Parametergradienten zurückgekoppelt. Ebenso werden die in dem Parameterprozessor 17 ermittelten Parameter $P_{3n}$ in den Parameterprozessor 17 zurückgekoppelt. Zugleich aber werden diese Parameter $P_{3n}$ in den Parameterprozessor 16 eingekoppelt.

Der Parameterprozessor 15, für den ersten Teilentzerrer 12 ist, wie auch der Parameterprozessor 16 für den zweiten Teilentzerrer 13 und der Parameterprozessor 17 für den dritten Teilentzerrer 14 an den Ausgang des Gesamtentzerrers, der adaptive Parameterprozessor 16 für den zweiten Teilentzerrer 13 ist zudem noch an den Ausgang des ersten Teilentzerrers 12 angeschlossen.

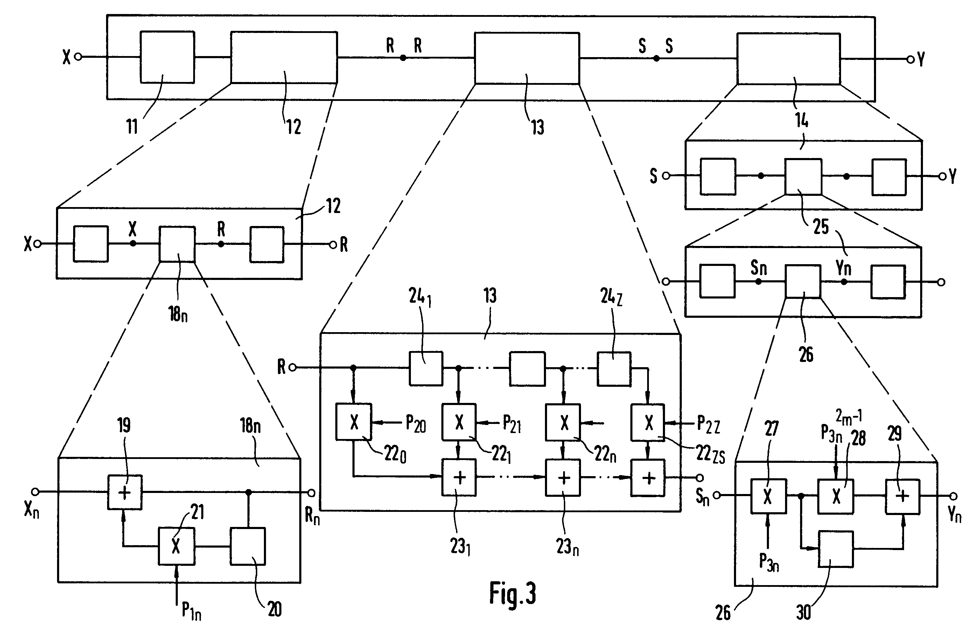

Figur 3 zeigt eine genauere Darstellung des Aufbaus des Entzerrernetzwerkes. Jede rekursive Kaskadenstufe 18 des ersten Teilentzerrers 12 besteht aus einem Addierer 19, in welchem zu dem Eingangssignal $X_n$, das in einer Verzögerungsstufe 20 um eine Rechenzeiteinheit verzögerte und in dem Multiplizierer 21 mit einem Parameter $p_{1n}$ multiplizierte Ausgangssignal $X_n$ des zeitlich vorhergehenden Adaptionsschrittes hinzuaddiert wird. Der ersten Kaskadenstufe des ersten Teilsystems wird also ein veränderbarer Parameter $p_{11}$ als Multiplikator zugeführt, der letzten Kaskadenstufe des ersten Teilentzerrers 12 ein Parameter $p_{1z}$.

Das zweite Teilsystem enthält einen Multiplizierer 22 und mehrere diesem in Reihe nachgeschaltete Addierer $23_1$ bis $23_z$. Das Eingangssignal R des zweiten Teilentzerrers 13 wird in diesem außerdem in einer Kette von Verzögerungsstufen $24_1$ bis $24_z$ insgesamt um z-Recheneinheiten verzögert. An den Ausgang jeder Verzögerungsstufe 24 ist ein weiterer Multiplizierer 22 angeschlossen, dem als zweite Eingangsgröße ein veränderbarer Parameter $p_2$ zugeleitet wird. Insgesamt ist in dem zweiten Teilentzerrer das Signal $P_{2z}$ durch Parameter veränderbar.

Der dritte Teilentzerrer besteht aus einer Doppelkaskade, d. h. jede ihrer Kaskadenstufen 25 hat wiederum eine Kaskadenstruktur, deren einzelne nicht-rekursive Kaskadenstufe 26 einen ersten Multiplizierer 27, einen weiteren nachgeschalteten zweiten Multiplizierer 28 und einen diesem folgenden Addierer 29 umfaßt. Die zweite Eingangsgröße des Addierers 29 kommt aus dem in der Verzögerungsstufe 30 um $2^{n-1}$ Rechenzeiteinheiten verzögerten Ausgangssignal des ersten Multiplizierers 27. In dem ersten Multiplizierer 27 wird das Eingangssignal der Kaskadenstufe mit dem zugeordneten der veränderlichen Parameter $p_{3n}$ multipliziert, während in dem zweiten Multiplizierer 28 das Ausgangssignal des Multiplizierers 27 mit einer Potenz des Parameterwertes $p_{3n}$ multipliziert wird. Hat die Kaskadenstufe die laufende Zahl n, dann beträgt die Potenz $2^{n-1}$.

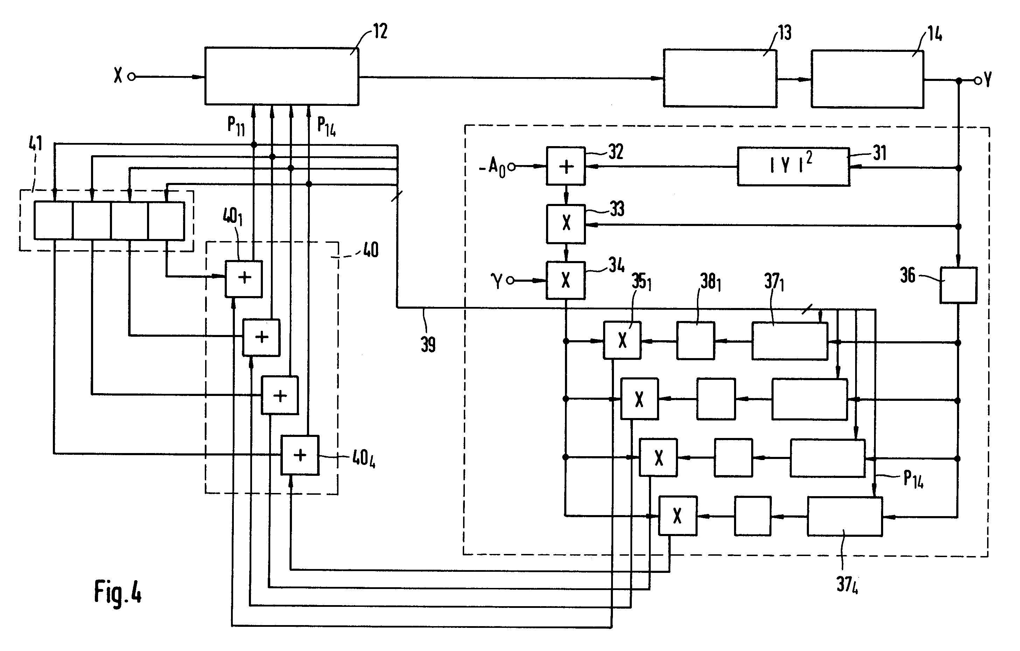

In Figur 4 ist der Parameterprozessor 15 für den ersten Teilentzerrer 12 in Form eines Blockschaltbildes näher dargestellt. Das Entzerrernetzwerk 12 umfaßt, wie bereits erwähnt, eine größere Anzahl Multiplikatoren 21, in denen der Signalwert jeweils mit anderen veränderbaren Paramete $p_{11}$ bis $p_{1z}$ multipliziert wird. Die Veränderung dieser Parameter erfolgt durch den adaptiven Parameterprozessor 15. In diesem Prozessor wird jede vorgenommene Änderung eines Parameters auf ihre Auswirkung auf das Signal hin überprüft und die Auswirkung steuert die Größe und die Richtung des nächsten Änderungsschrittes.

Dieser adaptive Prozessor ist an den Ausgang Y des Entzerrernetzwerkes angeschlossen und umfaßt in einem ersten Signalweg einen Betragsbildner 31, dessen Ausgang mit einem Addierer 32 verbunden ist, in dem vom Betrag $|Y^2|$ ein konstanter Wert $A_0$ abgezogen wird. Der Ausgang des Addierers 32 ist mit einem Multiplizierer 33 verbunden, dessen zweiten Eingang wiederum das Ausgangssignal Y des Entzerrernetzwerkes zugeführt ist. Der Ausgang des Multiplizierers 33 ist mit einem zweiten Multiplizierer 34 verbunden, in welchem das ihm zugeführte Signal mit einem Dämpfungsfaktor Gamma multipliziert wird.

Das Ausgangssignal des Multiplizierers 34 steht dann für eine Anzahl Multiplizierer 35 als Eingangssignalwert zur Verfügung. Im Ausführungsbeispiel sind jeweils vier veränderbare Parameter angenommen. Das zweite Eingangssignal für die vier Multiplizierer 35 wird vom Ausgangssignal Y des Gesamtentzerrers über eine Verzögerungsstufe 36, diedas Signal um eine Rechenzeiteinheit verzögert, sowie je ein Gradientenfilter 37 für jeden der vier Parameter $p_1$ und eine Schaltstufe 38 zur Bildung des konjugiert komplexen Signalwertes abgeleitet.

Die einzelnen Gradientenfilter 37 stimmen in ihrem Aufbau mit einer Kaskadenstufe $38_n$ überein, die anhand der Figur 3 bereits erläutert wurde und dort links unten dargestellt ist und die Schaltstufen 19 bis 21 umfaßt.

Die an den Multiplizierern $35_1$ bis $35_4$ abnehmbaren Informationen über die Richtung der Änderung der Parameter $p_{11}$ bis $p_{14}$ werden den vier Eingängen eines Addiernetzwerkes 40 zugeleitet und dort in Addierern $40_1$ bis $40_4$ den entsprechenden Parameterwerten $p_{11}$ bis $p_{14}$ aus dem unmittelbar vorhergehenden Adaptionsschritt, die einem Zwischenspeicher 41 entnehmbar sind, vorzeichenrichtig hinzuaddiert.

Die neuen Parameterwerte werden in die zugeordneten Eingänge $p_{11}$ bis $p_{14}$ des Entzerrernetzwerkes 12 eingespeist und zugleich in die Zwischenspeicher 41 eingelesen. Außerdem wird jedem Gradientenfilter 37 der zugeordnete momentane Parameterwert vom Ausgang des Parameterprozessors über eine Rückkopplung 39 zugeführt. Der Eingangssignalwert X des Entzerrernetzwerkes 12 wird entsprechend den neuen Parameterwerten verändert. Das verbesserte Signal Y wird dann wieder dem Parameterprozessor zugeführt.

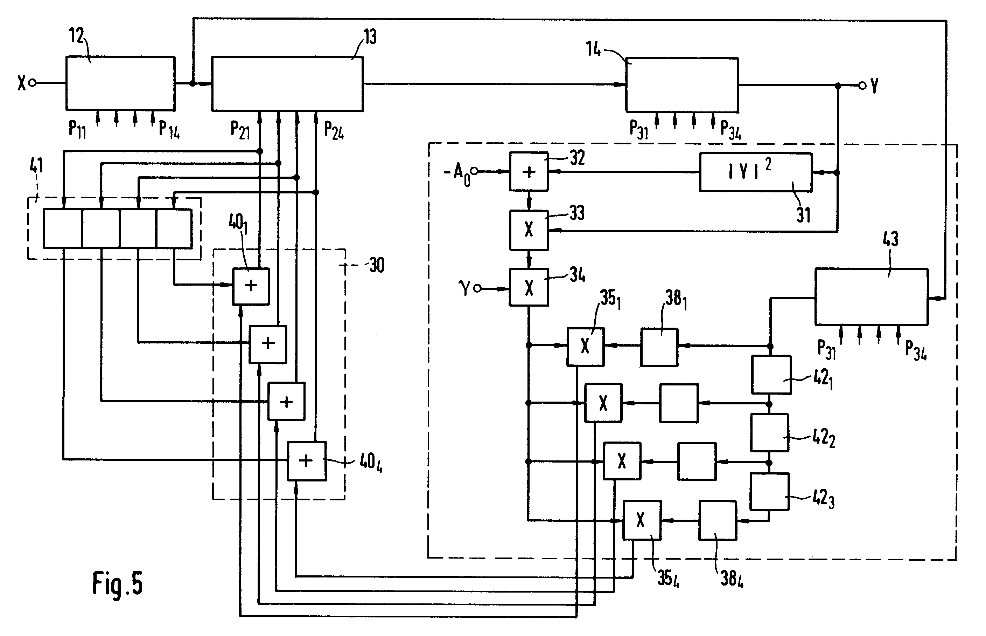

In der Figur 5 ist ein Parameterprozessor 16 für das zweite Teilentzerrernetzwerk 13 dargestellt. Die Schaltblöcke 31 bis 35, die an den Ausgang Y des Gesamtentzerrers angeschlossen sind, finden sich im Parameterprozessor 16 ebenso wieder, wie das an die Multiplizierer 35 angeschlossene Addiernetzwerk 40 und der Zwischenspeicher 41.

Die Stufen 38 zur Bildung des konjugiert komplexen Signalwertes sind entweder direkt oder über vorgeschaltete Verzögerungsstufen $42_n$, die das Signal jeweils um eine Rechenzeiteinheit verzögern, mit dem Ausgang eines Schaltblocks 43 verbunden, der in seinem Aufbau mit dem dritten Teilentzerrer 14 identisch ist. Der Eingang des Schaltblocks 43 liegt parallel zum Eingang des zweiten Teilentzerrers 13 an dem Ausgang des ersten Teilentzerrers 12.

Dem Schaltblock 43 werden auch dieselben Parameter $p_{3n}$ wie dem dritten Teilentzerrer 14 zugeordnet.

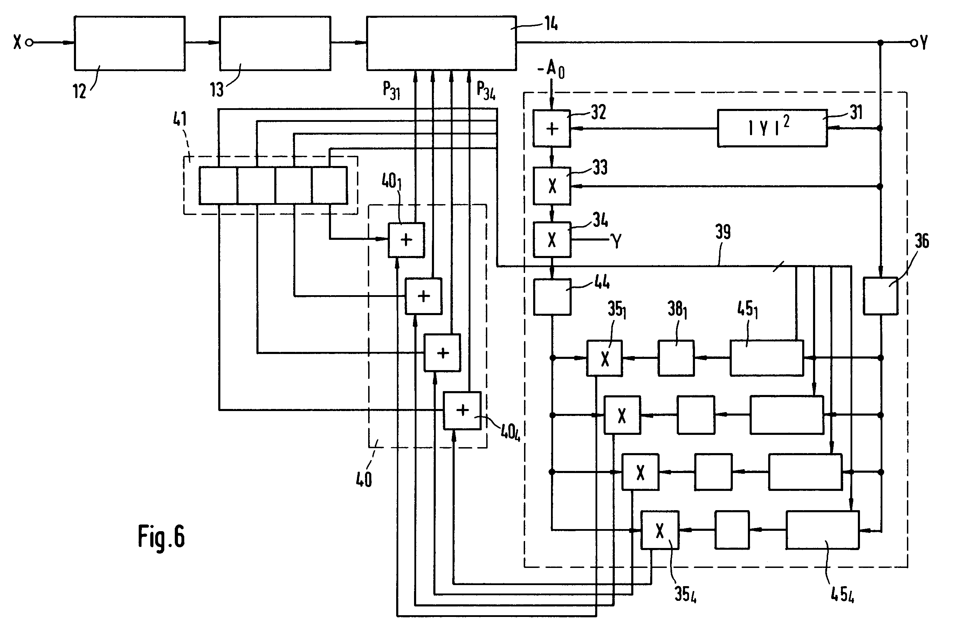

Die Gewinnung dieser Parameter $p_{3n}$ mit dem Parameterprozessor 17 wird an Hand der Figur 6 erläutert. Auch hier sind nur die Schaltblöcke näher dargestellt, die vom Parameterprozessor 15 abweichen. An den Ausgang des Multiplizierers 34 ist eine Verzögerungsleitung 44 angeschlossen, die das Ausgangssignal des Multiplizierers 34 um fünf frechenzeiteinheiten verzögert, da hier der Parameter berücksichtigt werden. Das Ausgangssignal der Verzögerungsleitung 44 wird den Multiplikatoren 35 zugeführt.

Dem Gradientenfilter 37 im Parameterprozessor 15 in Figur 4 entsprechen ihrer Funktion nach die Gradientenfilter 45 in Figur 5. Jedes Gradientenfilter 45 entspricht in seinem Aufbau einer Kaskadenstufe 26, wie sie in Figur 3 rechts unten dargestellt ist. Sie umfaßt somit ebenfalls die Baugruppen 27 bis 30.

In den ersten Gradientenfilter $45_1$ wird der Parameter $p_{31}$ und in dem letzten Gradientenfilter $45_4$ der Parameter $p_{34}$ über die Rückkopplung 39 zurückgekoppelt.

Der Ausgang der Gradientenfilter 45 führt dann wieder auf einen Schaltblock 38 zur Bildung des konjugiert komplexen Signalwertes und dessen Ausgang auf einen Multiplizierer 35. Der Ausgang dieser Multiplizierer 35 ist wieder mit einem Netzwerk 40 und einem Zwischenspeicher 41 verbunden.

Die am Ausgang des Netzwerkes 40 abnehmbaren Parameter $p_{31}$ bis $p_{34}$ werden auch dem Schaltblock 43 in Figur 5 zugeleitet.

Mit Hilfe dieses Entzerreraufbaues gelingt es, die Nullstellen in der Nähe des Einheitskreises in Mehr-Wegeübertragungskanäle für FM-Signale zu kompensieren. Dabei verwirklicht dieser Entzerreraufbau die Grundidee, den Kanal durch eine endliche Anzahl n von Nullstellen zu beschreiben und jede einzelne Nullstelle durch ein effizientes Kaskadensystem zu kompensieren, wodurch sich die Anzahl der Multiplikationen auf $1_{dn}$ reduziert. Dabei wird zwischen den Nullstellen im Sperrbereich und Durchlaßbereich unterschieden. Letztere werden durch Kaskaden-Pol-Approximationen abgedeckt. Zur Beseitigung der Wirkung der Gesamtheit der Sperrbereichsnullstellen im Durchlaßbereich genügt ein relativ niedergradiges FIR-Filter, das mit dem Kaskadenblöcken kombiniert wird.

Der erste Teilentzerrer 12 realisiert die Pol-Approximation zur Nullstellen-Kompensation im Durchlaßband und innerhalb des Einheitskreises; der zweite Teilentzerrer 13, das FIR-Filter zur summarischen Kompensation der Sperrbereichsnullstellen innerhalb und außerhalb des Einheitskreises und der dritte Teilentzerrer 14 die Pol-Approximation zur Kompensation der Nullstellen im Durchlaßband außerhalb des Einheitskreises.

Jede Kaskadenstufe 18 im ersten Teilentzerrer realisiert als minimalphasiger Teilentzerrer die Übertragungsfunktion

$$H_{1\gamma}(Z) \mathrel{\hat{=}} \frac{1}{1 - z_{01\gamma} z^{-1}} \;.$$

Der zweite Teilentzerrer 13 realisiert als gemischter Teilentzerrer die Übertragungsfunktion

$$H_2(Z) \,\hat{=}\, \sum_{\gamma=0}^{n_2-1} h_{2\gamma}\, z^{-\gamma}$$

Der dritte Teilentzerrer 14 realisiert als nicht-minimalphasiger Teilentzerrer die Übetragungsfunktion

$$H_{3\gamma}(Z) \,\hat{=}\, (-z_{03\gamma}^{-1}) \prod_{\mu=1}^{m_3} \left( (z_{03\gamma}^{-1})^{2^{\mu-1}} + z^{-2^{\mu-1}} \right)$$

Der Ersatz der Kaskadenform durch die entsprechende Parallelform ist an sich bekannt und liegt im Rahmen der Erfindung.

**Patentansprüche**

1. Autoradio mit einem digitalen Entzerrernetzwerk in der ZF-Stufe für durch Mehr-Wegeempfang verursachte Signalverzerrungen von Signalen mit frequenzmoduliertem, digitalisiertem Träger, mit einem Parameterprozessor-Netzwerk, das ein Gradientenfilter für die Parameter umfaßt,
   dadurch gekennzeichnet,
   daß das Entzerrernetzwerk aus der Hintereinanderschaltung eines ersten, rekursiven, adaptiven Teilentzerrers (12) in Kaskadenstruktur mit zugeordnetem Parameterprozessor (15), eines zweiten adaptiven Teilentzerrers (13) in Transversalstruktur mit zugeordnetem Parameterprozessor (16) und aus einem dritten, nichtrekursiven, adaptiven Teilentzerrer in Doppel-Kaskadenstruktur (14) mit zugeordnetem Parameterprozessor (17) besteht, wobei die Teilentzerrer Multiplikatoren (21, 22, 27, 28) enthalten, in denen der Signalwert jeweils mit anderen, veränderbaren Parametern multipliziert wird und die Veränderung dieser Parameter durch die Parameterprozessoren erfolgt.

2. Autoradio nach Anspruch 1,
   dadurch gekennzeichnet,
   daß für die aus dem dem ersten Teilentzerrer zugeordneten Parameterprozessor (15) gewonnenen adaptiv veränderlichen Parameter eine Rückkopplung in das Gradientenfilter (37) des Parameterprozessors (15) besteht, und daß für die aus dem dem dritten Teilentzerrer zugeordneten Parameterprozessor (17) gewonnenen adaptiv veränderlichen Parameter eine Rückkopplung in das Gradientenfilter (45) des Parameterprozessors (17) und zugleich eine Einkopplung in das Gradientenfilter (43) des Parameterprozessors (16) besteht.

3. Autoradio nach Anspruch 1 oder 2,
   dadurch gekennzeichnet,
   daß die einzelnen Elemente (26) der Doppelkaskade des dritten Teilentzerrers (14) einen ersten Multiplizierer (27), einen daran angeschlossenen zweiten Multiplizierer (28) und einen diesem nachgeschalteten Addierer (29) umfassen, wobei der zweite Eingang des Addierers (29) über eine Verzögerungsstufe (30) mit dem Ausgang des ersten Multiplizierers (27) verbunden ist, und daß dem ersten Multiplizierer (27) der zugeordneten Parameter $p_{3m}$, und dem zweiten Multiplizierer (28) ein potenzierter Wert des Parameters $p_{3m}$ als Multiplikator zugeführt sind, wobei die Potenz des Parameters $p_{3m}$ gleich $2^{m-1}$ ist und die Verzögerungszeit der Verzögerungsstufe (40) $2^{m-1}$ einer Rechenzeiteinheit beträgt, wenn die laufende Zahl des Elementes m ist.

4. Autoradio nach Anspruch 1, 2 oder 3,
   dadurch gekennzeichnet,

5

daß die Gradientenfilter (45) in dem dem dritten Teilentzerrer (14) zugeordneten Parameterprozessor (17) in ihrem Aufbau einem Element (26) der Doppel-Kaskade entsprechen.

## Claims

1. Car radio with a digital equalizer network in the intermediate frequency stage for signal distortions caused by multi-path reception with frequency-modulated digitized carrier, with a parameter processor network which comprises a gradient filter for the parameters, characterized in that the equalizer network consists of the series connection of a first recursive, adaptive sub-equalizer (12) in a cascade structure with associated parameter processor (15), of a second adaptive sub-equalizer (13) in a transverse structure with associated parameter processor (16) and of a third, non-recursive adaptive sub-equalizer in a double cascade structure (14) with associated parameter processor (17), the sub-equalizers containing multipliers (21, 22, 27, 28) in which the signal value is multiplied in each case by other, variable parameters and these parameters are changed by the parameter processors.

2. Car radio according to Claim 1, characterized in that there is feedback into the gradient filter (37) of the parameter processor (15) for the adaptively variable parameters which are acquired from the first parameter processor (15) associated with the first sub-equalizer, and in that there is feedback into the gradient filter (45) of the parameter processor (17) for the adaptively variable parameters acquired from the parameter processor (17) which is associated with the third sub-equalizer, and at the same time the parameter processor (16) is fed into the gradient filter (43).

3. Car radio according to Claim 1 or 2, characterized in that the individual elements (26) of the double cascade of the third sub-equalizer (14) comprise a first multiplier (27), a second multiplier (28) which is connected thereto and an adder (29) which is connected downstream thereof, the second input of the adder (29) being connected via a time-delay module (30) to the output of the first multiplier (27), and in that the associated parameter $P_{3m}$ is fed as multiplication factor to the first multiplier (27) and a value of the parameter $P_{3m}$ which is raised to a power is fed as multiplication factor to the second multiplier (28), the power of the parameter $P_{3m}$ being equal to $2^{m-1}$ and the time delay of the time-delay module (40) being $2^{m-1}$ of a computing time unit when the sequence number of the element is m.

4. Car radio according to Claim 1, 2 or 3, characterized in that the design of the gradient filters (45) in the parameter processor (17) associated with the third sub-equalizer (14) corresponds to an element (26) of the double cascade.

## Revendications

1. Autoradio avec réseau numérique d'égalisation dans l'étage FI pour les distorsions de signal engendrées par une réception selon des chemins multiples de signaux avec une porteuse numérisée à modulation de fréquence, un circuit de processeur de paramètres comprenant un filtre à gradients pour les paramètres,
autoradio caractérisé en ce que le réseau d'égalisation se compose du montage en série d'une première partie de circuit d'égalisation (12), adaptatif, récurrent, à structure en cascade avec un processeur de paramètres (15) associé, d'une seconde partie adaptative de circuit d'égalisation (13) à structure transversale avec un processeur de paramètres (16) associé, et d'une troisième partie de circuit d'égalisation (14) à double structure en cascade, adaptative, non récurrente, avec un processeur de paramètres (17) associé, les parties de circuit d'égalisation contenant des multiplicateurs (21, 22, 27, 28) qui multiplient la valeur du signal chaque fois par d'autres paramètres variables et modifient ces paramètres par les processeurs de paramètres.

2. Autoradio selon la revendication 1, caractérisé en ce que pour les paramètres variables, fournis de manière adaptative par le processeur de paramètres (15) associé à la première partie de circuit d'égalisation, on a une réaction dans le filtre à gradients (37) du processeur de paramètres (15), et pour les paramètres variables, adaptatifs, fournis par le processeur de paramètres (17) associé à la troisième partie de circuit d'égalisation, on a une réaction dans le filtre à gradients (45) du processeur de paramètres (17) et en même temps un couplage dans le filtre à gradients (43) du processeur de paramètres (16).

3. Autoradio selon la revendication 1 ou 2, caractérisé en ce que les différents éléments (26) de la double cascade de la troisième partie de circuit d'égalisation (14) comprennent un premier multiplicateur (27) auquel est relié un second multiplicateur (28) suivi d'un additionneur (29), la seconde entrée de l'additionneur (29) étant reliée par un étage de temporisation (30) à la sortie du premier multiplicateur (27), le premier multiplicateur (27) recevant le paramètre associé $p_{3m}$ et le second multiplicateur (28) recevant comme multiplicande une valeur élevée à la puissance du paramètre $p_{3m}$, cette puissance du paramètre $p_{3m}$ étant égale à $2^{m-1}$ et le temps de retard de l'étage de retard (40) correspondant à $2^{m-1}$ fois une unité de temps de calcul pour l'indice de l'élément égal à m.

4. Autoradio selon la revendication 1, 2 ou 3, caractérisé en ce que les filtres à gradients (45) du processeur de paramètres (17) associé à la troisième partie de circuit d'égalisation (14) ont dans leur structure un élément (26) de la double cascade.

EP 0 398 169 B1

Fig.1

Fig.2

HF  ZF  A/D  D/A  DEM  NF

$P_{1n}$  $P_{2n}$  $P_{3n}$

X  Y

Fig.3

Fig. 4

Fig.5

EP 0 398 169 B1

Fig.6

EP 0 398 169 B1